## Europäisches Patentamt

(19) **European Patent Office**

**Office européen des brevets**

(11) Veröffentlichungsnummer: **0 156 128**
**B1**

(12) **EUROPÄISCHE PATENTSCHRIFT**

(45) Veröffentlichungstag der Patentschrift:
**26.10.88**

(51) Int. Cl.⁴: **A 01 F 29/00**, A 01 D 45/02

(21) Anmeldenummer: **85101218.7**

(22) Anmeldetag: **06.02.85**

(54) **Nachzerkleinerungseinrichtung für Häckselgut.**

(30) Priorität: **08.02.84 DD 259937**

(43) Veröffentlichungstag der Anmeldung:
**02.10.85 Patentblatt 85/40**

(45) Bekanntmachung des Hinweises auf die Patenterteilung:
**26.10.88 Patentblatt 88/43**

(84) Benannte Vertragsstaaten:
**AT BE CH DE FR GB IT LI NL**

(56) Entgegenhaltungen:
**DE - A - 2 062 945**
**DE - A - 2 250 144**
**DE - A - 2 422 894**

(73) Patentinhaber: **VEB KOMBINAT FORTSCHRITT LANDMASCHINEN, Berghausstrasse 1, DDR-8355 Neustadt in Sachsen (DD)**

(72) Erfinder: **John, Günther, Dipl.-Ing., Fr.-Engels-Strasse 46, DDR-8355 Neustadt (DD)**
Erfinder: **Kretschmer, Karl-Heinz, Dipl.-Ing., Bruno-Dietze-Ring 28, DDR-8355 Neustadt (DD)**
Erfinder: **Schumacher, Horst, Dipl.-Ing., Laubigtweg 5b, DDR-8353 Langburkersdorf (DD)**
Erfinder: **Noack, Christian, Dipl.-Ing., Nr. 6, DDR-8601 Guttau (DD)**
Erfinder: **Hänel, Volker, Dipl.-Landw., Bruno-Dietze-Ring 32, DDR-8353 Neustadt (DD)**
Erfinder: **Röllich, Jürgen, Nr. 62, DDR-8361 Ehrenberg (DD)**

(74) Vertreter: **Zipse + Habersack, Kemnatenstrasse 49, D-8000 München 19 (DE)**

ACTORUM AG

## Beschreibung

Die Erfindung betrifft eine Nachzerkleinerungseinrichtung für Häckselgut geeignet zu Einsatz in Verbindung mit Scheibenradhäckslern und Schneid- oder Fördergebläsen mit einem Wurfrad und einem Gehäuse, wobei benachbart dem Wurfrad hinter einer Zuführöffnung eine oder mehrere antreibbare Zerkleinerungswalzen gelagert sind.

Bei der Herstellung von Lieschkolbenschrot und Ganzpflanzenhäcksel mit hohem Trockenmassegehalt ist aus tierphysiologischen Gründen die Zerkleinerung der Maiskörner bei aufgefaserten Stengelteilen erforderlich. Hierzu wurden an Scheibenradhäckslern und Schneidgebläsen bereits verschiedene Mittel eingesetzt.

Einmal werden z.B. nach der US 3 756 517 und der DE-OS 25 02 474 Nachzerkleinerungssiebe benutzt. Die Nachzerkleinerungssiebe sind dabei als gelochter zylindrischer Körper im Gehäuse des Wurfrades ausserhalb des Schneidbereiches angeordnet. Diese Nachzerkleinerungssiebe haben einen grossen Nachteil. Durch die relativ kleinen Sieböffnungen wird die Durchsatzleistung der Maschine stark reduziert und es kommt leicht zu Verstopfungen. Weiter sind gemäss der DD-PS 35 158 und der AT-PS 219 901 Wurfräder bekannt, die an ihren Enden Schlagleisten bzw. Schlagkämme besitzen. Diese Lösungen bringen in ihrer Gesamtheit nicht den erforderlichen Zerkleinerungsgrad. Es werden nicht alle Maiskörner zerschlagen.

Durch den zusätzlichen Einbau eines Siebes vor dem Auswurfschacht ist die Lösung nach der DD-PS 35 158 besonders verstopfungsgefährdet und die Auswurfleistung reicht nicht mehr aus, um grössere Wegstrecken zu überwinden.

Ferner sind Nachzerkleinerungseinrichtungen nach der AT-PS 207 162 und der DE-OS 20 62 945 bekannt, die mit einem Reibboden und Schlagleisten arbeiten. Hier ist zwar ein relativ guter Nachzerkleinerungseffekt erreichbar, aber es besteht ebenfalls die Gefahr einer Verstopfung. Andererseits sind derartige Maschinen speziell für das Häckseln von Mais mit hohem Trockenmassegehalt konstruiert. Beim Lieschkolbenschroten ist deren Arbeitsqualität jedoch unbefriedigend. Das gleiche trifft für die bei Scheibenradhäckslern und Wurfgebläsen von Trommelhäckslern bekannte kombinierte System von Reibboden, Schlagleisten und starren Schlagkämmen vor dem Auswurfschacht zu (Feldhäcksler Mengele SH 20/30, SF 300, SF 3000/4000). Bei anderen Häckselgütern, wo eine Nachzerkleinerung nicht erforderlich ist, besitzen diese Maschinen einen erhöhten Leistungsbedarf bzw. es sind erhebliche Umrüstarbeiten notwendig.

Letztlich ist in der DE-A-22 50 144 in Verbindung mit einem Trommelhäcksler eine Nachzerkleinerungseinrichtung mit aktiven Zerkleinerungswalzen beschrieben. Die Zerkleinerungswalzen sind am Umfang der Häckseltrommel über dem gesamten unteren Bereich verteilt angeordnet. Das nachzerkleinerte Erntegut fällt durch die Zerkleinerungswalzen nach unten heraus und wird über verschiedene Fördermittel abtransportiert. Dadurch dass zum Abtransport des nachzerkleinerten Erntegutes weitere Fördermittel notwendig sind, wird die Leistungsbilanz des Trommelhäckslers negativ beeinflusst und die Gesamtaufwendungen zum Abtransport des Erntegutes aus dem Trommelhäcksler sind hoch. Die Lösung gemäss DE-A-22 50 144 ist ausserdem im Aufbau sehr kompliziert und für einen Feldhäcksler wegen des hohen Bauraumbedarfs kaum einsetzbar.

Die Erfindung hat das Ziel, eine Nachzerkleinerungseinrichtung für Häckselgut zu schaffen, die universell einsetzbar ist, zuverlässig im Einsatz ist, einen geringen Leistungsbedarf besitzt und die für andere Erntegutarbeiten leicht umrüstbar ist.

Der Erfindung liegt die Aufgabe zugrunde, einen Nachzerkleinerungseinrichtung für Häckselgut gemäss dem Oberbegriff des Anspruchs 1 zu schaffen, die verstopfungsfrei arbeitet, dabei den Durchsatz der Maschine nur unwesentlich verringert, eine grosse Förderleistung der Maschine gewährleistet und eine gute Arbeitsqualität beim Lieschkolbenschroten erreicht.

Dies wird dadurch erreicht, dass die Zerkleinerungswalzen in einem zum Wurfrad offenen gesonderten Gehäuse gelagert sind und ein Boden dieses Gehäuses in Förderrichtung des Wurfrades stromab der einen oder mehreren Zerkleinerungswalzen in eine zum Wurfrad konzentrische Wurfwanne übergeht.

Das Häckselgut wird von den Wurfschaufeln des Wurfrades in das Gehäuse vor die Zerkleinerungswalze abgeworfen und von der oder den Zerkleinerungswalzen erfasst. Je nach Drehrichtung der Zerkleinerungswalze bzw. -walzen wird das Häckselgut zwischen dem Wurfrad und der bzw. den Zerkleinerungswalzen oder zwischen dem Boden und der bzw. den Zerkleinerungswalzen weiter zerkleinert. Bei zwei oder mehreren Zerkleinerungswalzen können diese die gleiche oder eine entgegengesetzte Drehrichtung aufweisen. Der Drehsinn richtet sich hierbei nach der jeweiligen Häckselgutart. Hinter der letzten Zerkleinerungswalze wird das nachzerkleinerte Häckselgut durch das Wurfrad über den Bereich der Wurfwanne für die Abgabe über einen Auswurfschacht beschleunigt.

Nach der Erfindung ist es zweckmässig, dass der Boden des Gehäuses zu der oder den Zerkleinerungswalzen oder umgekehrt die Zerkleinerungswalze oder -walzen zum Boden des Gehäuses einstellbar sind und wenn die Zerkleinerungswalzen Vorsprünge oder Messer sowie der Boden an seiner Innenseite Vorsprünge oder Reibleisten tragen. Hierdurch ist es möglich, für jede Häckselgutart eine optimale Spaltweite und einen guten Nachzerkleinerungseffekt zu erreichen. Desweiteren kann nach der Erfindung zwischen dem Boden und der Wurfwanne eine Gegenschneide angeordnet sein.

Letztlich ist es erfindungsgemäss sinnvoll, dass die Zerkleinerungswalze oder -walzen über einen Hülltrieb vom Wurfrad antreibbar sind und zwi-

schen Wurfrad und der Zerkleinerungswalze oder den Zerkleinerungswalzen in Verlängerung der Wurfwanne eine Abdeckung einfügbar ist.

Die Abdeckung wird dann eingefügt, wenn bei bestimmten Häckselgut- oder Erntegutarten keine zusätzliche Nachzerkleinerung erforderlich ist.

In diesem Falle ist es auch sinnvoll, den Antrieb der Zerkleinerungswalze oder -walzen stillzusetzen.

Die Erfindung hat den Vorteil, dass die Nachzerkleinerungseinrichtung völlig verstopfungsfrei arbeitet und einen geringen Leistungsbedarf besitzt. Andererseits sinkt die Durchsatzleistung des Scheibenradhäckslers bzw. Fördergebläses nur geringfügig ab. Die Maschinen sind auch weiterhin universell für alle Erntegutarten einsetzbar, da die erfindungsgemässe Nachzerkleinerungseinrichtung sehr leicht ausserbetrieb setzbar ist. Letztlich sind die mit der Erfindung ausgestatteten Maschinen durch eine sehr gute Förderleistung gekennzeichnet.

Nachstehend soll die Erfindung an mehreren Ausführungsbeispielen näher erläutert werden. In den zugehörigen Zeichnungen zeigen:

Fig. 1 einen Schnitt durch einen Scheibenradhäcksler mit zwei gleichartigen Zerkleinerungswalzen;

Fig. 2 einen teilweisen Schnitt durch einen Scheibenradhäcksler mit zwei unterschiedlichen Zerkleinerungswalzen;

Fig. 3 einen teilweisen Schnitt durch einen Scheibenradhäcksler mit einer Zerkleinerungswalze;

Fig. 4 einen teilweisen Schnitt wie in Fig. 3, jedoch mit einer anderen Ausführung der Zerkleinerungswalze;

Fig. 5 einen teilweisen Schnitt wie in Fig. 3, jedoch mit einer messerbesetzten und schwingengelagerten Zerkleinerungswalze

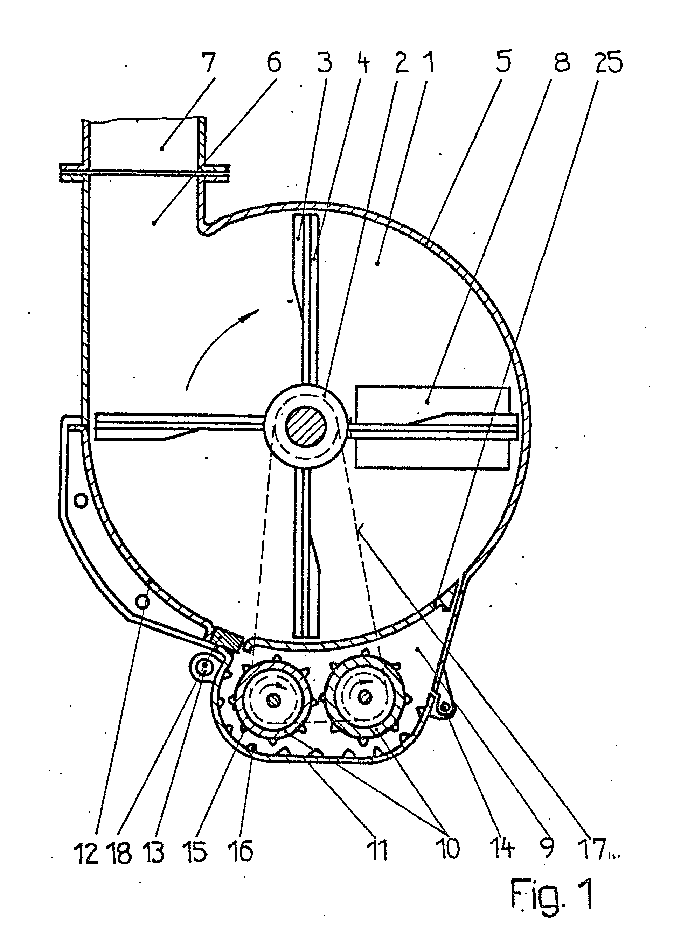

Nach Fig. 1 sitzt in einem Gestell 1 ein Wurfrad 2, das Wurfschaufeln 3 und Messer 4 trägt. Das Wurfrad 2 ist teilweise mit einem Mantel 5 umgeben, der in einen Auswurfschacht 6 mündet.

Auf dem Auswurfschacht 6 sitzt schwenkbar ein Auswurfboden 7 bzw. ein Förderrohr. Im Gestell 1 ist ferner vor dem Wurfrad 2 eine Zuführöffnung 8 für das Erntegut eingelassen. Am Umfang des Wurfrades 2, hinter der Zuführöffnung 8, sind einem zum Wurfrad 2 offenen, gesonderten Gehäuse 9, zwei gleichartige Zerkleinerungswalzen 10 zugeordnet. Ein Boden 11 des Gehäuses 9 geht dabei an seiner Hinterkante in eine zum Wurfrad 2 konzentrisch angeordnete Wurfwanne 12 über. Der Boden 11 ist über einen Exzenter 13 und eine Aufhängung 14 zu den Zerkleinerungswalzen 10 einstellbar.

Die Zerkleinerungswalzen 10 tragen in dieser Ausführung an ihrem Umfang eine Vielzahl von Vorsprüngen 15 ähnlich den Stiften einer Dreschtrommel. Der Boden 11 als Gegenstück der Zerkleinerungswalzen 10 besitzt ebenfalls eine Vielzahl von solchen Vorsprüngen 16. Angetrieben werden die Zerkleinerungswalzen 10 mit einem Hülltrieb 17 von dem Wurfrad 2. Die Drehrichtung der Zerkleinerungswalzen 10 ist so gewählt, dass das Häckselgut zwischen Boden 11 und Zerkleinerungswalzen 10 eingezogen wird. Zur weiteren Verbesserung des Zerkleinerungseffektes ist zwischen dem Boden 11 und der Wurfwanne 12 eine Gegenschneide 18 im Gestell 1 befestigt.

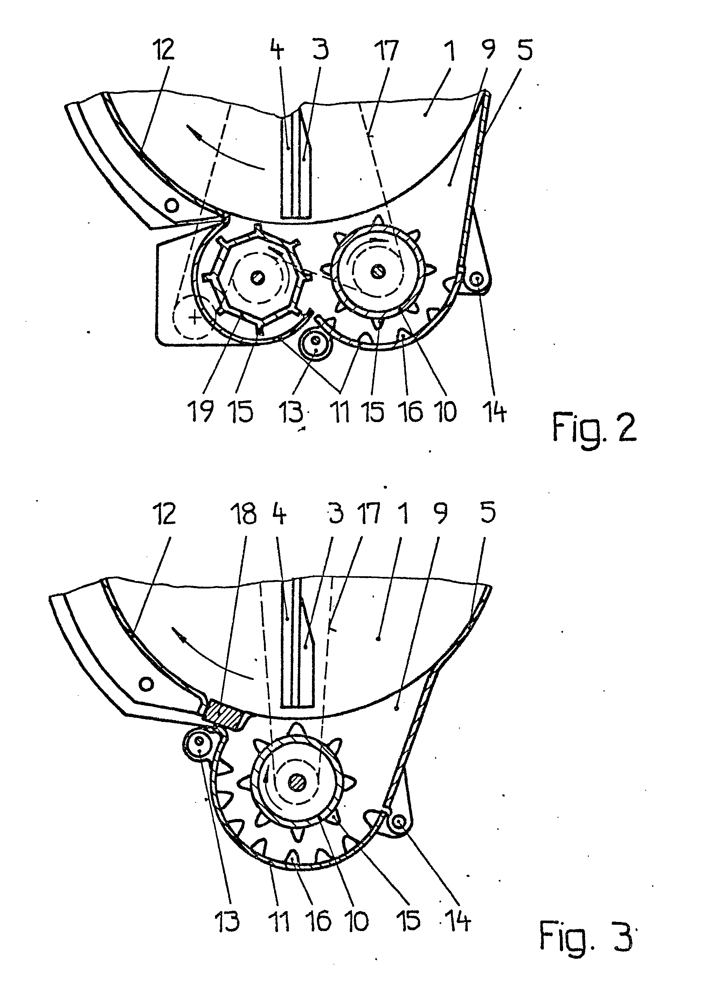

In der Ausführung nach Fig. 2 sind gegenüber dem ersten Ausführungsbeispiel unterschiedlich gestaltete Zerkleinerungswalzen 10; 19 eingesetzt. Als erste Zerkleinerungswalze 10 ist eine der bereits beschriebenen Art angeordnet. Hieran ist eine zweite Zerkleinerungswalze 19 im Gehäuse 9 gelagert, bei der die Vorsprünge 15 als durchgehende Stege ausgebildet sind. Der Boden 11 ist in dieser Ausführung geteilt gefertigt. Der vordere Teil trägt Vorsprünge 16 und ist wie im ersten Ausführungsbeispiel zur Zerkleinerungswalze 10 einstellbar. Der hintere Teil des Bodens 11 ist feststehend und eng um die Zerkleinerungswalze 19 gelegt. Der Antrieb erfolgt hier ebenfalls über einen Hülltrieb 17, wobei die Zerkleinerungswalzen 10, 19 gegenläufig angetrieben werden. Die Zerkleinerungswalze 19 fördert das Häckselgut hoch und es erfolgt eine nochmalige Zerkleinerung zwischen den Wurfschaufeln 3 und den Vorsprüngen 15 der Zerkleinerungswalze 19.

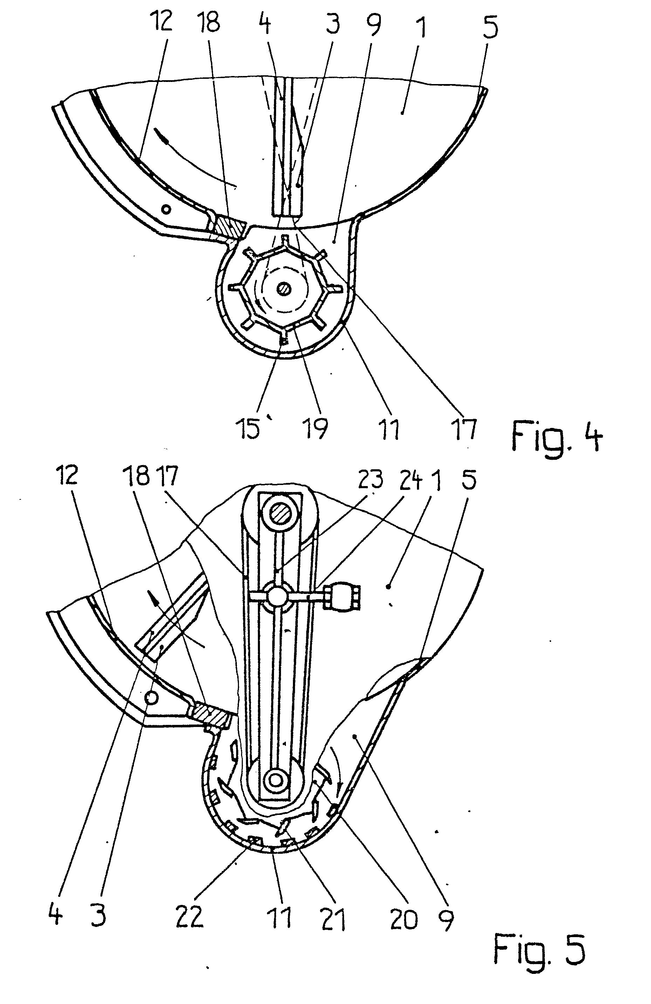

In den Ausführungsbeispielen nach Fig. 3 und 4 sind die Zerkleinerungswalzen 10, 19 in Einzelanordnung dargestellt, wobei der prinzipielle Aufbau der Ausführung nach Fig. 3 der des ersten Ausführungsbeispiels entspricht. Gemäss Fig. 4 ist eine Zerkleinerungswalze 19 mit durchgehenden Stegen und umgekehrter Drehrichtung, wie bereits unter Fig. 2 beschrieben, eingesetzt. Beide Ausführungsbeispiele besitzen zwischen dem Boden 11 und der Wurfwanne 12 eine Gegenschneide 18. In Fig. 5 ist eine letzte Ausführung dargestellt. Die Zerkleinerungswalze 20 ist hier mit Messern 21 bestückt. Der Boden 11 ist in dieser Ausführung feststehend angeordnet und trägt Reibleisten 22, die etwa in Richtung der Achse der Zerkleinerungswalze 20 verlaufen. Die Drehrichtung der Zerkleinerungswalze 20 ist so gewählt, dass das Erntegut zwischen Boden 11 und Zerkleinerungswalze 20 eingezogen wird. Die Zerkleinerungswalze 20 ist ferner über Schwingen 23 an der Welle des Wurfrades 2 gelagert. An eine der Schwingen 23 greift eine am Gestell 1 aufgenommene Stellspindel 24 an. Damit kann die Zerkleinerungswalze 20 gegenüber dem Boden 11 verschwenkt werden. Es ist jedoch auch denkbar, dass wie bei den anderen Ausführungsbeispielen die Zerkleinerungswalze 20 fest im Gehäuse 9 gelagert ist und der Boden 11 einstellbar ist.

Durch eine sinnreiche Kombination der Ausführungsform nach Fig. 1 bis 5 ergeben sich weitere Ausführungsbeispiele, auf die jedoch nicht näher eingegangen werden soll.

Letztlich besteht bei allen Ausführungen die Möglichkeit, die Nachzerkleinerungseinrichtung stillzusetzen. Dazu wird, wie in Fig. 1 dargestellt, zwischen das Wurfrad 2 und die Zerkleinerungswalze oder -walzen 10, 19, 20 in Verlängerung der Wurfwanne 12 eine Abdeckung 25 eingefügt. In diesem Falle wird der Hülltrieb 17 stillgesetzt.

## Patentansprüche

1. Nachzerkleinerungseinrichtung für Häckselgut geeignet zum Einsatz in Verbindung mit Scheibenradhäckslern und Schneid- oder Fördergebläsen mit einem Wurfrad (2) und einem Gehäuse (1), wobei benachbart dem Wurfrad hinter einer Zuführöffnung (8) eine oder mehrere antreibbare Zerkleinerungswalzen (10, 19, 20) gelagert sind, dadurch gekennzeichnet, dass die Zerkleinerungswalzen (10, 19, 20) in einem zum Wurfrad (2) offenen gesonderten Gehäuse (9) gelagert sind und ein Boden (11) dieses Gehäuses (9) in Förderrichtung des Wurfrades (2) stromab der einen oder mehreren Zerkleinerungswalzen in eine zum Wurfrad (2) konzentrische Wurfwanne (12) übergeht.

2. Nachzerkleinerungseinrichtung nach Anspruch 1, dadurch gekennzeichnet, dass der Boden (11) des Gehäuses (9) zu der oder den Zerkleinerungswalzen (10, 19, 20) einstellbar ist.

3. Nachzerkleinerungseinrichtung nach Anspruch 1, dadurch gekennzeichnet, dass die Zerkleinerungswalze oder -walzen (10, 19, 20) zum Boden (11) des Gehäuses einstellbar sind.

4. Nachzerkleinerungseinrichtung nach Anspruch 1, dadurch gekennzeichnet, dass die Zerkleinerungswalzen (10, 19, 20) Vorsprünge (15) oder Messer (21) tragen.

5. Nachzerkleinerungseinrichtung nach Anspruch 1, dadurch gekennzeichnet, dass der Boden (11) an seiner Innenseite Vorsprünge (16) oder Reibleisten (22) trägt.

6. Nachzerkleinerungseinrichtung nach Anspruch 1, dadurch gekennzeichnet, dass zwischen dem Boden (11) und der Wurfwanne (12) eine Gegenschneide (18) angeordnet ist.

7. Nachzerkleinerungseinrichtung nach Anspruch 1, dadurch gekennzeichnet, dass die Zerkleinerungswalze oder -walzen (10, 19, 20) über einen Hülltrieb (17) vom Wurfrad (2) eintreibbar sind.

8. Nachzerkleinerungseinrichtung nach Anspruch 1, dadurch gekennzeichnet, dass zwischen dem Wurfrad (2) und der Zerkleinerungswalze oder den -walzen (10, 19, 20) in Verlängerung der Wurfwanne (12) eine Abdeckung (25) einfügbar ist.

## Claims

1. Final comminuting equipment for chaff and suitable for use in conjunction with disc wheel chaff cutters and cutting or conveying blowers with a scoop wheel (2) and a housing (1), wherein one or more drivable comminuting cylinders (10, 19, 20) are borne behind a feed opening (8) and adjacent the scoop wheel, characterised thereby, that the comminuting cylinders (10, 19, 20) are borne in a separate housing (9) open towards the scoop wheel (2) and a base (11) of this housing (9), in conveying direction of the scoop wheel (2) and downstream of the one or more comminuting cylinders, passes over into a thrower trough (12) concentric with the scoop wheel (2).

2. Final comminuting equipment according to claim 1, characterised thereby, that the base (11) of the housing (9) is settable relative to the comminuting cylinder or cylinders (10, 19, 20).

3. Final comminuting equipment according to claim 1, characterised thereby, that the comminuting cylinder or cylinders (10, 19, 20) is or are settable relative to the base (11) of the housing.

4. Final comminuting equipment according to claim 1, characterised thereby, that the comminuting cylinders (10, 19, 20) carry projections (15) or knives (21).

5. Final comminuting equipment according to claim 1, characterised thereby, that the base (11) at its inward side carries projections (16) or rubbing strips (22).

6. Final comminuting equipment according to claim 1, characterised thereby, that a cutting support (18) is arranged between the base (11) and the thrower trough (12).

7. Final comminuting equipment according to claim 1, characterised thereby, that the comminuting cylinder or cylinders (10, 19, 20) is or are drivable by the scoop wheel (2) through a looping drive (17).

8. Final comminuting equipment according to claim 1, characterised thereby, that a cover (25) is insertable in prolongation of the thrower trough (12) between the scoop wheel (2) and the comminuting cylinder or cylinders (10, 19, 20).

## Revendications

1. Dispositif de post-broyage pour produits hachés, destiné à être utilisé en combinaison avec des hachoirs à roue trancheuse et des ventilateurs de coupe et de transport, comprenant une roue d'éjection (2) et un carter (1), un ou plusieurs cylindres de broyage (10, 19, 20) pouvant être entraînés, étant montés adjacents à la roue d'éjection (2) et en aval d'une ouverture d'alimentation (8), caractérisé en ce que les cylindres de broyage (10, 19, 20) sont montés dans un carter distinct (9), ouvert vers la roue d'éjection (2), et un fond (11) de ce carter (9) se terminant dans la direction de transport de la roue d'éjection (2), en aval d'un ou plusieurs cylindres de broyage, par une cuvette d'éjection (12) concentrique à la roue d'éjection (2).

2. Dispositif de post-broyage selon la revendication 1, caractérisé en ce que le fond (11) du carter (9) est réglable par rapport au ou aux cylindre(s) de broyage (10, 19, 20).

3. Dispositif de post-broyage selon la revendication 1, caractérisé en ce que le ou les cylindre(s) de broyage (10; 19; 20) sont réglables par rapport au fond (11) du carter.

4. Dispositif de post-broyage selon la revendication 1, caractérisé en ce que les cylindres de broyage (10, 19, 20) portent des saillies (15) ou lames (21).

5. Dispositif de post-broyage selon la revendication 1, caractérisé en ce que le fond (11) porte des saillies (16) ou des nervures de friction (22) sur sa face intérieure.

6. Dispositif de post-broyage selon la revendication 1, caractérisé en ce qu'une contre-lame (18) est montée entre le fond (11) et la cuvette d'éjection (12).

7. Dispositif de post-broyage selon la revendication 1, caractérisé en ce que le ou les cylindre(s) de broyage (10, 19, 20) est ou sont entraîné(s) par la roue d'éjection (2), par l'intermédiaire d'une transmission sous carter (17).

8. Dispositif de post-broyage selon la revendication 1, caractérisé en ce qu'un couvercle (25) peut être interposé entre la roue d'éjection (2) et le ou les cylindre(s) de broyage (10, 19, 20), dans le prolongement de la cuvette d'éjection (12).

Fig. 1

Fig. 2

Fig. 3

Fig. 4

Fig. 5